# EUROPÄISCHE PATENTSCHRIFT

(11) **EP 2 835 337 B1**
(45) Veröffentlichungstag und Bekanntmachung des Hinweises auf die Patenterteilung: **17.08.2016**
(21) Anmeldenummer: 14172739.6
(22) Anmeldetag: 17.06.2014
(51) Int. Cl.: B66F 9/075, B62B 3/06

(54) **Flurförderzeug mit einem Antriebsteil und einem Lastteil**
Industrial truck with a drive part and a load part
Chariot de manutention équipé d'une partie entraînement et d'une partie chargement

(30) Priorität: 26.06.2013 DE 102013010656
(43) Veröffentlichungstag der Anmeldung: 11.02.2015
(73) Patentinhaber: Jungheinrich Aktiengesellschaft, 22047 Hamburg (DE)
(72) Erfinder: Helbach, Astrid, 21379 Scharnebeck (DE); Helbach, Aimo, 21379 Scharnebeck (DE)
(74) Vertreter: Hauck Patentanwaltspartnerschaft mbB

(56) Entgegenhaltungen:
- EP-A1- 0 933 281
- DE-A1- 10 329 133
- DE-U1-202010 007 263

## Beschreibung

Die vorliegende Erfindung betrifft ein Flurförderzeug, das mit einem Antriebsteil und einem Lastteil ausgestattet ist. Bevorzugt bezieht sich die Erfindung auf Kommissionierfahrzeuge, die gleichzeitig zwei Paletten in Längsrichtung des Fahrzeugs auf dem Lastteil transportieren können. Hierbei handelt es sich bevorzugt um Horizontalkommissionierer, die mit einem Standplatz für die Bedienperson ausgestattet sind.

Bei bekannten Flurförderzeugen tritt bei der Mitnahme von leeren Paletten das Problem auf, dass, obwohl nur eine Palette zunächst kommissioniert wird, eine zweite später zu kommissionierende Palette die Arbeit behindert.

Aus EP 0 933 281 A1 ist ein Kommissionierfahrzeug bekannt geworden, dessen Lastaufnahmemittel zwei Paletten und/oder Rollcontainer in Längsrichtung hintereinander aufnehmen kann.

Aus DE 103 29 133 A1 ist ein Verfahren zur Übernahme und/oder Übergabe von kommissionierter Ware bekannt. Hierzu wird ein Fahrzeug mit Elektrohängebahnen eingesetzt, die an einer Fahrzeugsäule angeordnet sind. In der Fahrzeugsäule sind Fächer zur Aufnahme von leeren Paletten vorgesehen.

Der Erfindung liegt die Aufgabe zugrunde, ein Flurförderzeug bereitzustellen, das auf einem für zwei Paletten vorgesehenen Lastteil das Kommissionieren mit nur einer Palette bequem und einfach erlaubt.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug besitzt ein Antriebsteil und ein Lastteil. Das Lastteil ist mit einem Paar von Lastgabeln versehen, die an ihrem von dem Antriebsteil fortweisenden Ende jeweils mindestens eine Lastrolle oder ein Lastrad besitzen. Erfindungsgemäß ist an dem Lastteil ein Palettenhalter vorgesehen, der eine auf den Lastgabeln stehende Palette in der aufrechten Position sichern kann. Der Palettenhalter erlaubt es, eine leere Palette aufrecht stehend auf den Lastgabeln zu sichern und in dieser Position mit dem Flurförderzeug zu verfahren. Der Vorteil eines solchen Palettenhalters liegt darin, dass die stehende Palette nahe zu dem Fahrzeugschwerpunkt angeordnet und so das Fahrzeug wie ein nicht oder nur mit einer Palette beladenes Fahrzeug verfahren werden kann. Erfindungsgemäß weist der Palettenhalter einen verschwenkbaren Haken auf, der in einer heruntergeklappten Position die Palette ganz oder teilweise hintergreift. Durch das Hintergreifen der Palette kann die senkrecht auf den Lastgabeln stehende Palette sicher an dem Fahrzeug mitgeführt werden.

In einer bevorzugten Ausgestaltung besitzen die Lastgabeln eine Länge, die es erlaubt, zwei Paletten hintereinander, in Längsrichtung der Lastgabeln auf diesen anzuordnen. Hierbei ist der erfindungsgemäße Palettenhalter an dem zum Antriebsteil weisenden Ende der Lastgabeln angeordnet. Der erfindungsgemäße Palettenhalter bei einem Kommissionierfahrzeug, das zwei Paletten in Längsrichtung hintereinander aufnehmen kann, besitzt den Vorteil, dass bei einem Kommissionierbetrieb mit nur einer Palette die nicht benötigte Palette aufrecht stehend mitgeführt werden kann.

In einer bevorzugten Weiterbildung des erfindungsgemäßen Flurförderzeugs weist das Lastteil ein zu dem Antriebsteil weisendes Lastenschutzgitter auf, an dem der Palettenhalter angeordnet ist. Die Anordnung des Palettenhalters an dem Lastenschutzgitter des Lastteils besitzt den Vorteil, dass die Palette gegen dieses geneigt, mit transportiert wird. Soll die hochgeklappte Palette dann benutzt werden, kann der Palettenhalter geöffnet werden und die Palette in ihre horizontale Position heruntergeklappt werden. Hierbei ist die zum Antriebsteil weisende Kante dann direkt an dem Lastenschutzgitter angeordnet, so dass die Palette auch direkt benutzt werden kann.

In einer besonders bevorzugten Ausgestaltung ist der Palettenhalter mittig an dem Lastenschutzgitter angeordnet, so dass der Palettenhalter von beiden Seiten des Fahrzeugs zugänglich ist und eine Bedienperson den Palettenhalter von beiden Seiten des Fahrzeugs lösen kann.

In einer weiteren bevorzugten Ausgestaltung ist der Haken des Palettenhalters als ein Schnapphaken ausgebildet, der in eine die Palette sichernde Position federvorgespannt ist. Der Schnapphaken hintergreift bevorzugt von oben die senkrecht stehende Palette.

In einer zweckmäßigen Ausgestaltung besitzt der Schnapphaken eine schräg verlaufende Anlageschulter, über die der Haken in seine geöffnete Position angehoben wird, wenn eine auf den Lastgabeln angeordnete Palette in ihre senkrecht geklappte Position gestellt wird. Durch die Ausbildung als Schnapphaken mit einer schräg verlaufenden Anlageschulter entsteht der Vorteil, dass beim Aufrichten der Palette, die nach oben weisende Kante der Palette gegen die Anlageschulter stößt und so den Schnapphaken öffnet, um die Palette oder Teile der Palette zu hintergreifen.

In einer bevorzugten Ausgestaltung weist der Palettenhalter seitlich einen Entriegelungshebel auf, über den der Haken aus seiner die aufrecht stehende Palette sichernden Position in eine geöffnete Position gestellt werden kann. Durch die Verwendung des Entriegelungshebels ist ein einfaches Entsichern und Öffnen der stehenden Palette auf den Lastgabeln möglich.

Der erfindungsgemäße Palettenhalter wird nachfolgend anhand eines Ausführungsbeispiels näher erläutert. Es zeigen:
- Fig. 1: einen Horizontalkommissionierer mit einer hochgeklappten leeren Palette und
- Fig. 2: eine Detailansicht zu einem alternativ ausgeführten Palettenhalter.

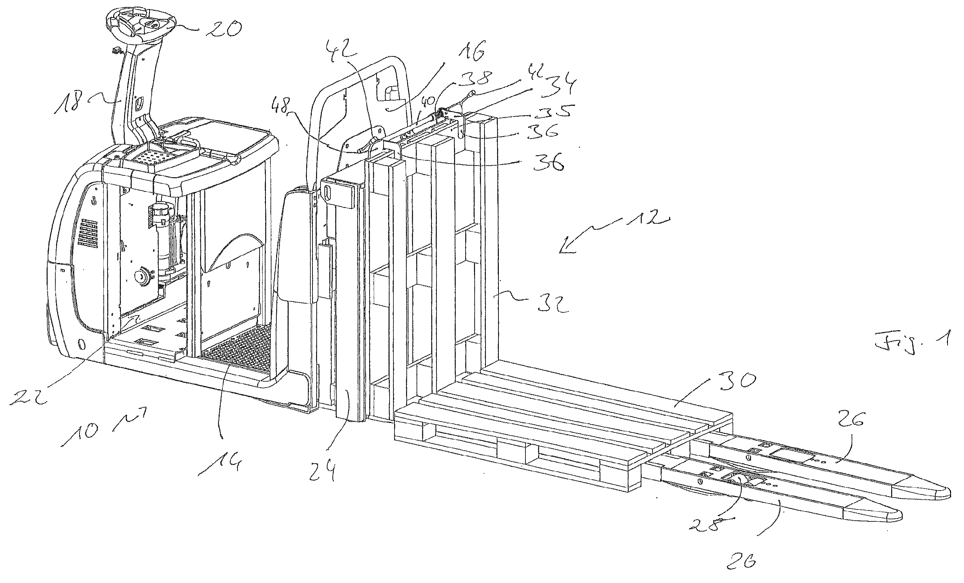

Fig. 1 zeigt in einer perspektivischen Ansicht schräg von der Seite einen Horizontalkommissionier mit einem Antriebsteil 10 und einem Lastteil 12. Das Antriebsseil 10 ist in Fig. 1 schematisch dargestellt. Das Antriebsteil 10 besitzt einen Fahrerstandplatz 14 mit einer Rückwand 16 auf der stehend der Fahrer an einer Kurzdeichsel 18 angeordnete Bedienelemente 20 betätigen kann. Das Antriebsteil beisitzt ein seitlich zugängliches Batteriefach 22, das in seiner geöffneten Position dargestellt ist.

Das Lastteil 12 des erfindungsgemäßen Fahrzeugs ist mit seinem rückwärtigen Rahmen 24 an dem Antriebsteil 10 bzw. dessen Fahrzeugrahmen befestigt. Das Lastteil 12 besitzt zwei Lastgabeln 26. Die Lastgabeln 26 besitzen jeweils nahe ihrem freien Ende ein Paar von Lastrollen 28, die die Lastgabeln 26 abstützen. Die Lastgabeln 26 besitzen eine Länge, so dass zwei Paletten, bevorzugt Euro-Paletten, hintereinander in Längsrichtung aufgenommen werden können und im Ablauf des Kommissioniervorgangs beladen und/oder entladen werden können.

Die in Fig. 1 dargestellten Paletten 30, 32 sind derart an dem erfindungsgemäßen Fahrzeug angeordnet und positioniert, dass auf der Palette 30 aufgenommene Waren abgestellt werden können. Die Palette 32 steht senkrecht parallel zu einem rückwärtigen Lastenschutzgitter 48, das gemeinsam mit dem Lastschlitten in der Höhe verfährt. Das Lastenschutzgitter besitzt an seinem oberen Rand eine Aussparung durch die der Palettenhalter sich erstreckt. Die senkrecht stehende Palette steht auf den Lastgabeln auf und wird an ihrer oberen Kante durch einen Palettenhalter 34 gesichert. Der Palettenhalter 34 hintergreift einen Quersteg 35 der Palette 32 und sichert diese so vor einem unbeabsichtigen Umfallen.

Der Palettenhalter 34 besitzt zwei Schnapphaken 36. Die Schnapphaken 36 sind durch eine schematisch dargestellte Feder 38 in ihre sichernde Position vorgespannt. Die Schnapphaken 36 sind auf einer gemeinsamen Welle 40 angeordnet, die an ihren Enden jeweils Entriegelungshebel 42 aufweist. Durch eine Betätigung der Entriegelungshebel werden die Schnapphaken 36 in ihre geöffnete Position verschwenkt und die Palette 32 somit freigegeben.

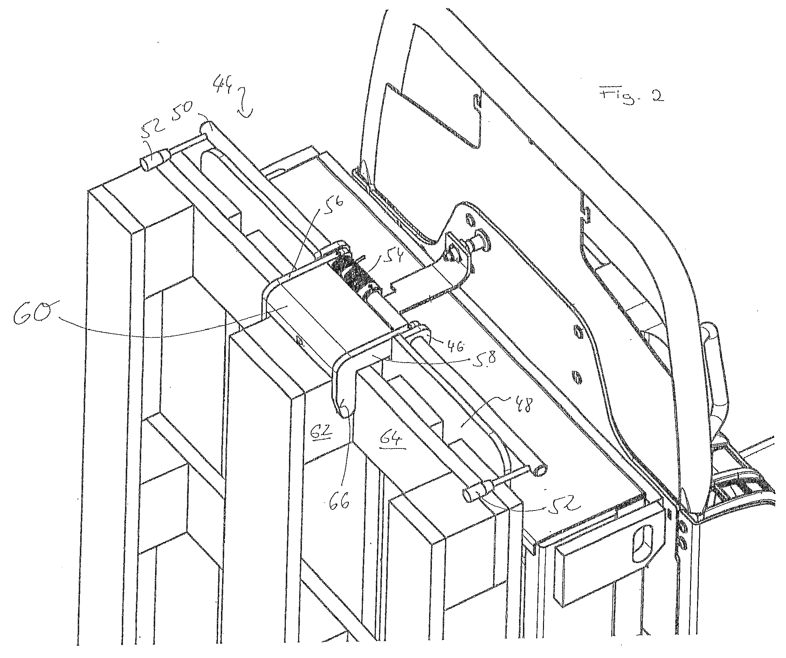

Fig. 2 zeigt eine Detailansicht eines alternativ ausgebildeten Palettenhalters. Der in Fig. 2 dargestellte Palettenhalter 44 ist über eine Öse 46 an einer Rückseite des Lastenschutzgitters 48 befestigt. Da der Paletttenhalter keine großen Kräfte oder Lasten aufnehmen muss, kann die Anbindung vergleichsweise einfach ausgeführt sein. Der Palettenhalter 44 besitzt wieder eine durchgehende Welle 50, an deren Ende Entriegelungshebel 52 angeordnet sind. Über eine auf der Welle 50 angeordnete Feder 54 sind die Haken 56, 58 in die dargestellte Position vorgespannt. Die Haken 56 und 58 stehen dichter beieinander und sind in dem dargestellten Ausführungsbeispiel durch ein Zwischenstück 60 miteinander verbunden. Das Zwischenstück 60 besitzt hierbei gerade eine Breite, die größer ist als die Breite des Palettenzwischenblocks 62. Die Haken 56, 58 hintergreifen den Querträger 64. Jeder der Haken 56, 58 ist L-förmig ausgebildet, wobei in der die Palette haltenden Position der horizontale Schenkel der Haken 56 und 58 auf den Querträger 64 aufliegt. Die Haken 56, 58 besitzen an ihren freien Ende eine angeschrägte Schulter 66, über die der Querträger 64 von der in ihre senkrechte Position hochgeklappten Palette die Haken 56, 58 beiseite drückt.

## Patentansprüche

1. Flurförderzeug mit einem Antriebsteil und einem Lastteil, das ein Paar von Lastgabeln aufweist, die auf ihren von dem Antriebsteil fortweisenden Ende jeweils eine Lastrolle besitzen,
**dadurch gekennzeichnet, dass**
ein Palettenhalter an dem Lastteil vorgesehen ist, der mindestens einen verschwenkbaren Haken aufweist, der eine auf den Lastgabeln stehende Palette in seiner heruntergeklappten Position ganz oder teilweise hintergreifen kann, um diese zu sichern.

2. Flurförderzeug nach Anspruch 1, **dadurch gekennzeichnet, dass** die Lastgabeln eine Länge aufweisen, die es erlauben, zwei Paletten hintereinander auf den Lastgabeln anzuordnen, wobei der Palettenhalter an dem zum Antriebsteil weisenden Ende angeordnet ist.

3. Flurförderzeug nach Anspruch 1 oder 2, **dadurch gekennzeichnet, dass** das Lastteil ein zu dem Antriebsteil weisendes Lastenschutzgitter aufweist und der Palettenhalter an dem Lastenschutzgitter angeordnet ist.

4. Flurförderzeug nach Anspruch 3, **dadurch gekennzeichnet, dass** der Palettenhalter mittig, bezogen auf die Fahrzeugbreite, an der Rückwand angeordnet ist.

5. Flurförderzeug nach einem der Ansprüche 1 bis 4, **dadurch gekennzeichnet, dass** der Haken als ein Schnapphaken ausgebildet ist, der in seine die Palette sichernde Position federvorgespannt ist.

6. Flurförderzeug nach Anspruch 5, **dadurch gekennzeichnet, dass** der Schnapphaken eine schräge Anlageschulter aufweist, über die der Haken in seine geöffnete Position gestellt wird, wenn eine auf den Lastgabeln stehende Palette in ihre senkrechte Position geklappt wird.

7. Flurförderzeug nach einem der Ansprüche 1 bis 6, **dadurch gekennzeichnet, dass** seitlich des Hakens ein Entriegelungshebel vorgesehen ist, über den der Haken aus seiner sichernden Position in eine geöffnete Position gestellt werden kann.

## Claims

1. An industrial truck with a drive portion and a load portion which comprises a pair of load forks each of which have a load roller at the end facing away from the drive portion,
**characterised in that**
a palette holder is provided for the load portion, which comprises at least one pivotal hook which can completely or partly reach behind a palette standing on the load forks in its folded down position in order to secure it.

2. The industrial truck according to claim 1, **characterised in that** the load forks have a length which permits to arrange two palettes in a row on the load forks, wherein the palette holder is arranged at the end facing towards the drive portion.

3. An industrial truck according to claim 1 or 2, **characterised in that** the load portion has a load protection fence facing towards the drive portion and that the palette holder is arranged on the load protection fence.

4. The industrial truck according to claim 3, **characterised in that** the palette holder is arranged on the rear wall centrally with respect to the vehicle width.

5. An industrial truck according to any one of the claims 1 to 4, **characterised in that** the hook is designed as a snap-in hook, which is spring biased in its position securing the palette.

6. The industrial truck according to claim 5, **characterised in that** the snap-in hook has an inclined abutment shoulder via which the hook is set into its opened position when a palette standing on the load forks is folded into its vertical position.

7. An industrial truck according to any one of the claims 1 to 6, **characterised in that** an unlocking lever is provided laterally of the hook, via which the hook can be set into an opened position from its securing position.

## Revendications

1. Chariot de manutention avec une partie d'entrainement et une partie de charge qui comporte une paire de fourches de charge, dont chacune a un rouleau de charge dans l'extrémité tournée à l'écart de la partie d'entrainement,
**caractérisé en ce que**
un support de palette est prévu sur la partie de charge, qui comporte au moins un crochet pivotant qui peut entièrement ou partiellement agripper derrière une palette debout sur les fourches de charge dans sa position rabattue pour sécuriser celle-ci.

2. Chariot de manutention selon la revendication 1, **caractérisé en ce que** les fourches de charge ont une longueur qui permet d'arranger deux palettes en enfilade sur les fourches de charge, le support de palette étant arrangé sur l'extrémité qui montre vers la partie d'entrainement.

3. Chariot de manutention selon les revendications 1 ou 2, **caractérisé en ce que** la partie de charge a un dosseret de charge montrant vers la partie d'entrainement et que le support de palette est arrangé sur le dosseret.

4. Chariot de manutention selon la revendication 3, **caractérisé en ce que** le support de palette est arrangé sur la paroi derrière en position centrée par rapport à la largeur du véhicule.

5. Chariot de manutention selon l'une quelconque des revendications 1 à 4, **caractérisé en ce que** le crochet est formé comme un crochet d'encliquetage qui est précontraint par un ressort à sa position qui sécurise la palette.

6. Chariot de manutention selon la revendication 5, **caractérisé en ce que** le crochet d'encliquetage a un épaulement de butée incliné par lequel le crochet est mis en sa position ouverte quand une palette debout sur les fourches de charge est repliée dans sa position verticale.

7. Chariot de manutention selon l'une quelconque des revendications 1 à 6, **caractérisé en ce que** un levier de déverrouillage est prévu au côté latéral du crochet, par lequel le crochet peut être mis à une position ouverte à partir de sa position sécurisante.
